# EUROPÄISCHE PATENTANMELDUNG

(11) **EP 4 289 263 A1**
(43) Veröffentlichungstag der Anmeldung: **13.12.2023**
(21) Anmeldenummer: 23177679.0
(22) Anmeldetag: 06.06.2023
(51) Int. Cl.: A01J 25/11, A01J 25/12

(54) **ABFÜLLEINRICHTUNG**

(30) Priorität: 10.06.2022 DE 102022114667
(71) Anmelder: ALPMA Alpenland Maschinenbau GmbH, 83543 Rott am Inn (DE)
(72) Erfinder: Strohn, Gisbert, 83123 Amerang (DE)
(74) Vertreter: Manitz Finsterwald Patent- und Rechtsanwaltspartnerschaft mbB

(57) **Zusammenfassung**

Eine Abfülleinrichtung (10) zum Füllen zumindest eines Aufnahmebehältnisses (12) oder einer Anordnung von Aufnahmebehältnissen mit einem Käsebruch-Molke-Gemisch, umfasst zumindest zwei Ausbringeinrichtungen (14), die zum Ausbringen des Käsebruch-Molke-Gemisches in das Aufnahmebehältnis oder die Aufnahmebehältnisse eingerichtet und ausgebildet sind, wobei jede der Ausbringeinrichtungen zumindest eine Durchflusssteuereinrichtung (16) zum Steuern eines Durchflusses des Käsebruch-Molke-Gemisches durch die jeweilige Ausbringeinrichtung und zumindest eine Sensoreinheit (18) zur Bestimmung zumindest eines für das die jeweilige Ausbringeinrichtung durchströmende Käsebruch-Molke-Gemisch charakteristischen Parameters umfasst, wobei eine Steuereinheit (24) vorgesehen ist, die zum Steuern zumindest eines Betriebsparameters der Ausbringeinrichtungen, insbesondere zumindest eines Betriebsparameters der Durchflusssteuereinrichtungen, auf der Grundlage des für das Käsebruch-Molke-Gemisch charakteristischen Parameters eingerichtet und ausgebildet ist.

## Beschreibung

Die Erfindung betrifft eine Abfülleinrichtung zum Füllen zumindest eines Aufnahmebehältnisses oder einer Anordnung von Aufnahmebehältnissen mit einem Käsebruch-Molke-Gemisch.

Bei der Herstellung von Käse ist in der Regel ein Verfahrensschritt erforderlich, im Zuge dessen ein Käsebruch-Molke-Gemisch - ein Gemisch aus einer festen Phase (Käsebruch) und einer flüssigen Phase (Molke) - in Aufnahmebehältnisse oder in eine Anordnung von Aufnahmebehältnissen ausgebracht oder gefüllt wird. Als Aufnahmebehältnis im Sinne dieser Erfindung gelten beliebige Behältnisse, in denen ein Gemisch der vorstehend genannten Art aufgenommen werden kann, beispielsweise Wannen oder ähnliches.

Beispielsweise wird nach dem Ablauf einer Bruchbereitungszeit der Inhalt eines Käsefertigers in das bzw. die vorstehend genannte(n) Behältnis(se) entleert. Das abgefüllte Gemisch wird anschließend weiteren Prozessschritten zugeführt. Üblicherweise werden entsprechende Füllverfahren elektronisch geregelt ausgeführt.

Beispielsweise ist das Aufnahmebehältnis als sogenannte Vorpresswanne ausgebildet oder die Anordnung von Aufnahmebehältnissen ist Teil einer sogenannte Kassettenpresse. Das Ausbringen des Gemisches geschieht dabei über ein Verteilrohr mit mehreren über die Breite des Aufnahmebehältnisses bzw. der Aufnahmebehältnisse angeordneten Ausbringeinrichtungen.

Nach vollständigem Ausbringen des Käsebruch-Molke-Gemisches in eine Vorpresswanne und nach Ausführen eines Pressvorgangs, bei dem überschüssige Molke abgeführt wird und damit nur der gepresste Käsebruch (auch als Käsekuchen bezeichnet) in der Vorpresswanne verbleibt, wird der Käsekuchen idealerweise in volumetrisch identische und gleichgewichtige Teilstücke zerteilt. Im Falle des Ausbringens in Aufnahmebehältnisse, welche Teil einer Kassettenpresse sind, entfällt zumeist das Zerteilen des Käsekuchens, da das Käsebruch-Molke-Gemisch bereits in Käseformen, welche der gewünschten Käsegröße entsprechen, gefüllt worden ist.

Das Verhältnis zwischen Bruch und Molke in dem Volumen des auszubringenden Gemisches, d.h. der Anteil des festen Käsebruchs in dem Flüssigvolumen, hängt von diversen Einflussfaktoren ab, wie etwa dem Füllstand des Käsefertigers, der Größe des Käsefertigers, dem Fettgehalt des Käsebruchs und/oder der angewandten Rezeptur. Dies kann zur Folge haben, dass das Verhältnis zwischen Bruch und Molke nicht stets konstant ist und auch nicht immer zuverlässig reproduziert werden kann.

Zudem kann es zu technisch unvermeidbaren Entmischungsvorgängen in dem Käsefertiger, in einem optional vorgesehenen Puffertank, in einem Leitungssystem und insbesondere in dem eingangs beschriebenen Verteilrohr kommen, was die vorstehend erläuterte, unerwünschte zeitliche Variation des Durchflusses durch die einzelnen Ausbringeinrichtungen des Verteilrohres zusätzlich verstärkt.

In Folge dessen kann es zu einer örtlich inhomogenen Ausbringung des Käsebruch-Molke-Gemisches in das Aufnahmebehältnis bzw. die Anordnung von Aufnahmebehältnissen kommen, was wiederum bedeutet, dass nach Beendigung des Ausbring- und Pressvorgangs manche Abschnitte der Vorpresswanne mehr Käsebruch aufweisen als andere Abschnitte, bzw. dass manche Wannen der Kassettenpresse mehr Käsebruch aufweisen als andere Wannen, sodass in einer Charge Käse mit unterschiedlichen Eigenschaften erzeugt werden. Derartige Unterschiede führen mitunter zu erheblichen Problemen und Verlusten bei der Weiterverarbeitung.

Dementsprechend besteht eine Aufgabe der vorliegenden Erfindung darin, eine verbesserte Abfülleinrichtung zu schaffen, die eine zeitlich und räumlich möglichst gleichmäßige Ausbringung eines Käsebruch-Molke-Gemisches ermöglicht.

Diese Aufgabe wird erfindungsgemäß durch die Merkmale des Anspruch 1 und insbesondere dadurch gelöst, dass die Abfülleinrichtung zumindest zwei Ausbringeinrichtungen umfasst, die zum Ausbringen des Käsebruch-Molke-Gemisches in das Aufnahmebehältnis oder die Aufnahmebehältnisse eingerichtet und ausgebildet sind. Jede der Ausbringeinrichtungen der Abfülleinrichtung umfasst ferner zumindest eine Durchflusssteuereinrichtung zum Steuern eines Durchflusses des Käsebruch-Molke-Gemisches durch die jeweilige Ausbringeinrichtung und zumindest eine Sensoreinheit zur Bestimmung zumindest eines für das die jeweilige Ausbringeinrichtung durchströmende Käsebruch-Molke-Gemisch charakteristischen Parameters. Ferner ist eine Steuereinheit vorgesehen, welche zum Steuern zumindest eines Betriebsparameters der Ausbringeinrichtungen, insbesondere zumindest eines Betriebsparameters der Durchflusssteuereinrichtungen, auf der Grundlage des für das Käsebruch-Molke-Gemisch charakteristischen Parameters eingerichtet und ausgebildet ist.

Mittels der Sensoreinheit kann der Käsebruch-Molke-Durchfluss durch die jeweilige Ausbringungseinrichtung überwacht werden. Wird dabei beispielsweise eine Abweichung von einem Soll-Zustand festgestellt, kann der Durchfluss mit Hilfe der Durchflusssteuereinrichtung angepasst werden, um die Abweichung zu kompensieren. Somit kann der Durchfluss durch jede der einzelnen Ausbringeinrichtungen zeitlich im Wesentlichen konstant gehalten werden, sodass das Käsebruch-Molke-Gemisch homogen verteilt in das Aufnahmebehältnis bzw. die Anordnung von Aufnahmebehältnissen ausgebracht werden kann.

Für eine zuverlässige und genaue Regulierung des Durchflusses kann zumindest eine der Durchflusssteuereinrichtungen eine Pumpe umfassen. Zusätzlich oder alternativ zu der Pumpe kann eine Ventileinrichtung vorgesehen sein. Insbesondere umfasst jede der Durchflusssteuereinrichtungen zumindest eine, bevorzugt genau eine Pumpe.

Der Betriebsparameter der Durchflusssteuereinrichtung kann eine Pumpleistung der Pumpe sein.

Gemäß einer Ausführungsform kann jede Ausbringeinrichtung genau einen Füllkopf aufweisen, wobei jedem der Füllköpfe genau ein Aufnahmebehältnis der Anordnung von Aufnahmebehältnissen zugeordnet sein kann und/oder wobei dem Aufnahmebehältnis mehrere Füllköpfe zugeordnet sein können. Ein Füllkopf ist als Einrichtung zu verstehen, aus der das Gemisch aus der Ausbringeinrichtung tatsächlich austritt, bevor es in das oder die Aufnahmebehältnis(se) eintritt.

Ferner kann die Steuereinheit dazu eingerichtet und ausgebildet sein, das Ausbringen des Käsebruch-Molke-Gemisches in die Aufnahmebehältnisse der Anordnung von Aufnahmebehältnissen für jedes Aufnahmebehältnis individuell zu steuern und/oder das Ausbringen des Käsebruch-Molke-Gemisches in das Aufnahmebehältnis räumlich zu steuern, um eine möglichst homogene Verteilung des Gemischs zu erzielen.

Der für das Käsebruch-Molke-Gemisch charakteristische Parameter kann eine Durchflussmenge, eine Volumendichte, eine Dichteverteilung, eine Temperatur, eine thermische oder elektrische Leitfähigkeit, eine thermische oder elektrische Kapazität und/oder ein Absorptionskoeffizient des Käsebruch-Molke-Gemisches sein.

Des Weiteren kann die erfindungsgemäße Abfülleinrichtung eine Bewegungseinrichtung umfassen, welche zum gemeinsamen oder individuellen Bewegen der Ausbringeinrichtungen relativ zu dem Aufnahmebehältnis oder der Anordnung von Aufnahmebehältnissen eingerichtet und ausgebildet ist.

Entsprechend kann die Steuereinheit ferner dazu eingerichtet und ausgebildet sein, den Betriebsparameter der Ausbringeinrichtungen auf der Grundlage zumindest eines Parameters der Bewegung der Ausbringeinrichtungen, insbesondere in Abhängigkeit einer Geschwindigkeit der Bewegung, mit welcher die Ausbringeinrichtungen gemeinsam oder individuell relativ zu dem Aufnahmebehältnis oder der Anordnung von Aufnahmebehältnissen bewegt werden, zu steuern.

Gemäß einer weiteren Ausführungsform kann die Bewegungseinrichtung einen Zwischen- oder Puffertank umfassen, der mit den Ausbringeinrichtungen in Verbindung steht, wobei der Zwischentank eine Mischeinrichtung, insbesondere einen Mischrotor, zum Homogenisieren des Käsebruch-Molke-Gemischs umfassen kann.

Zudem kann zumindest ein Sensor zum Erfassen eines charakteristischen Füllparameters des in das Aufnahmebehältnis oder die Anordnung von Aufnahmebehältnissen gefüllten Käsebruch-Molke-Gemischs vorgesehen sein.

Die vorgenannte Aufgabe wird erfindungsgemäß auch durch das Verfahren gemäß dem Anspruch 12 zur Steuerung einer Abfülleinrichtung gemäß zumindest einer der vorstehend beschriebenen Ausführungsformen gelöst, und insbesondere dadurch, dass das erfindungsgemäße Verfahren das Erfassen des charakteristischen Parameters von der Sensoreinheit und das Steuern zumindest eines Betriebsparameters der Ausbringeinrichtungen auf der Grundlage des erfassten charakteristischen Parameters umfasst.

Das Verfahren kann ferner das Erfassen eines charakteristischen Füllparameters des in das Aufnahmebehältnis oder die Anordnung von Aufnahmebehältnissen gefüllten Käsebruch-Molke-Gemischs mittels zumindest eines Sensors und das Steuern zumindest eines Betriebsparameters der Ausbringeinrichtungen auf der Grundlage des erfassten charakteristischen Füllparameters umfassen.

Zudem kann das Verfahren das Erfassen eines Parameters der Bewegung der Ausbringeinrichtungen mittels zumindest eines Sensors und/oder das Empfangen eines Parameters der Bewegung der Ausbringeinrichtungen von einer Steuereinrichtung der Bewegungseinrichtung und das Steuern zumindest eines Betriebsparameters der Ausbringeinrichtungen auf der Grundlage des erfassten oder empfangenen Parameters der Bewegung der Ausbringeinrichtungen umfassen.

Die erfindungsgemäße Abfülleinrichtung kann auch Bestandteil eines Systems sein, das eine Abfülleinrichtung nach einer der vorstehend beschriebenen Ausführungsformen und ein Aufnahmebehältnis oder eine Anordnung von Aufnahmebehältnissen umfasst.

Nachfolgend wird die Erfindung bespielhaft anhand vorteilhafter Ausführungsformen unter Bezugnahme auf die beigefügten Zeichnungen beschrieben. Es zeigen:
- Fig. 1A: eine Draufsicht auf eine Variante einer Abfülleinrichtung für ein Aufnahmebehältnis;
- Fig. 1B: eine Querschnittansicht der Abfülleinrichtung von Fig. 1A;
- Fig. 2: eine Draufsicht auf eine Variante einer Abfülleinrichtung für eine matrixförmige Anordnung von Aufnahmebehältnissen;
- Fig. 3: eine Draufsicht auf eine weiteren Variante einer Abfülleinrichtung;
- Fig. 4A: eine perspektivische Ansicht einer Variante einer Abfülleinrichtung, bei der die Abfülleinrichtung eine Bewegungseinrichtung mit einem Zwischentank umfasst;
- Fig. 4B: eine Querschnittansicht der Abfülleinrichtung von Fig. 4A;
- Fig. 5: eine Querschnittansicht einer Variante einer Abfülleinrichtung, bei der zumindest ein Sensor zum Erfassen eines charakteristischen Füllparameters in dem Aufnahmebehältnis oder der Anordnung von Aufnahmebehältnissen angeordnet ist; und
- Fig. 6: eine Querschnittansicht auf eine Variante einer Abfülleinrichtung, bei der jede der Ausbringeinrichtungen einen Füllkopf aufweist.

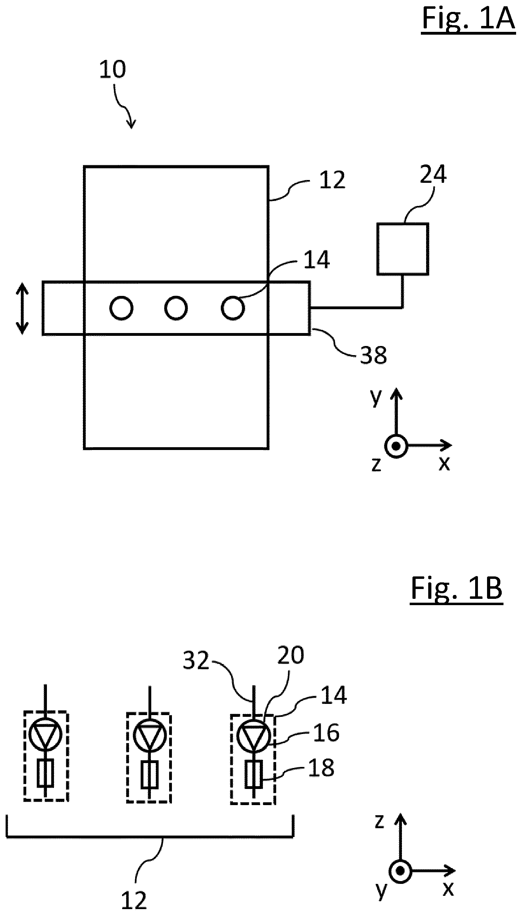

Fig. 1A zeigt eine schematische Darstellung einer beispielhaften Variante einer Abfülleinrichtung 10 gemäß der vorliegenden Erfindung. Die Abfülleinrichtung 10 umfasst ein Aufnahmebehältnis 12, welches durch mindestens zwei Ausbringeinrichtungen 14 (im vorliegenden Beispiel konkret drei Ausbringeinrichtungen 14) mit einem Käsebruch-Molke-Gemisch befüllt werden kann.

Das Aufnahmebehältnis 12 kann beispielsweise eine Vorpresswanne sein. Bei einem Ausbringvorgang des Käsebruch-Molke-Gemisches in das Aufnahmebehältnis 12 bewegen sich die Ausbringeinrichtungen 14 relativ zu dem Aufnahmebehältnis 14 (vgl. Doppelpfeil). Um dies zu ermöglichen, umfasst die Abfülleinrichtung 10 eine Bewegungseinrichtung 38, welche die Ausbringeinrichtungen 14 gemeinsam relativ zum dem Aufnahmebehältnis 12 mit einer gewünschten Geschwindigkeit bewegen kann. Auch eine individuelle oder gruppenweise Bewegbarkeit der Ausbringeinrichtungen 14 ist denkbar. Die Bewegungseinrichtung 38 ist beispielsweise ein linear verfahrbarer Wagen. Das Ermitteln der Geschwindigkeit kann beispielsweise mittels eines Sensors, beispielsweise mittels eines optischen Encoders, erfolgen. Es ist auch eine Anordnung vorstellbar, bei der das Aufnahmebehältnis 14 relativ zu den Ausbringeinrichtungen 14 bewegt werden kann.

Die Steuerung der Wagens 38 erfolgt mittels einer Steuereinheit 24.

Wie in der Querschnittsansicht von Fig. 1B gezeigt ist, sind dem Aufnahmebehältnis 12 drei Ausbringeinrichtungen 14 zugeordnet, und die einzelnen Ausbringeinrichtungen 14 werden über jeweilige Förderrohre 32 mit dem Käsebruch-Molke-Gemisch versorgt. Die Förderrohre 32 stehen beispielsweise - mittelbar oder unmittelbar - mit einem Käsefertiger und/oder mit einem das abzufüllende Gemisch enthaltenden Tank in Verbindung.

Jede der Ausbringeinrichtungen 14 umfasst zumindest eine Durchflusssteuereinrichtung 16 zum Steuern eines Durchflusses des Käsebruch-Molke-Gemisches durch die jeweilige Ausbringeinrichtung 14. Bevorzugt ist die Durchflusssteuereinrichtung 16 eine Pumpe 20. Die Durchflusssteuereinrichtung 16 kann aber auch als ein steuerbares Ventil, eine Drossel, o.ä. ausgebildet sein oder eine solche Komponente und eine Pumpe umfassen.

Des Weiteren umfasst jede der Ausbringeinrichtungen 14 zumindest eine Sensoreinheit 18 zur Bestimmung zumindest eines für das die jeweilige Ausbringeinrichtung 14 durchströmende Käsebruch-Molke-Gemisch charakteristischen Parameters. Der für das Käsebruch-Molke-Gemisch charakteristische Parameter ist beispielsweise eine Durchflussmenge, eine Volumendichte, eine Dichteverteilung, eine Temperatur, eine thermische oder elektrische Leitfähigkeit, eine thermische oder elektrische Kapazität und/oder ein Absorptionskoeffizient des Käsebruch-Molke-Gemisches.

Der Sensor 18 ist beispielsweise ein Tomografie-Sensor ("electrical resistance tomography" oder ERT sensor).

Für ein präzises Kontrollieren des Durchflusses durch jede der Ausbringeinrichtungen 14 ist die Durchflusssteuereinrichtung 16 der Sensoreinheit 18 vorgelagert, d.h. in Bezug auf die Sensoreinheit 18 stromaufwärts, angeordnet. Die Durchflusssteuereinrichtung 16 kann aber auch stromabwärts der Sensoreinheit 18 angeordnet sein. Es ist auch möglich, jeder Ausbringeinrichtungen 14 mehrere Sensoreinheiten gleichen oder unterschiedlichen Typs oder Messprinzips zuzuordnen.

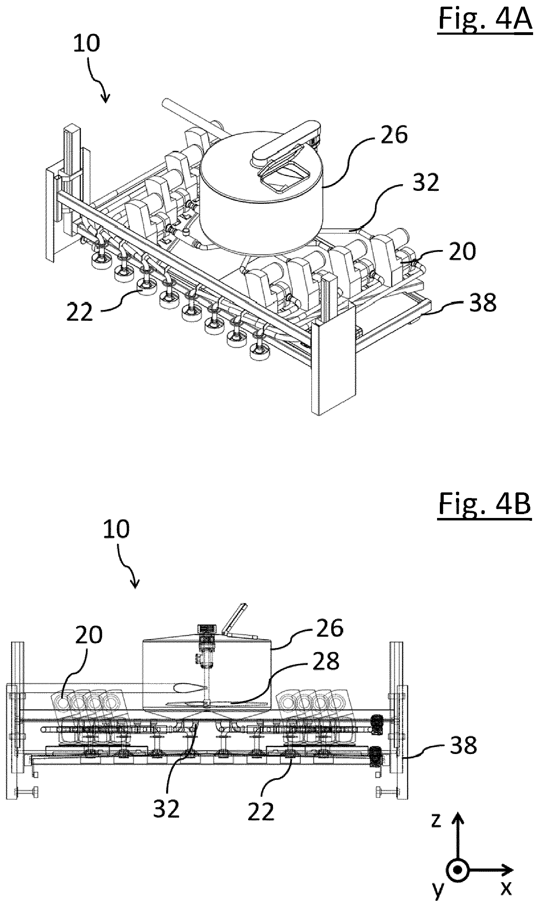

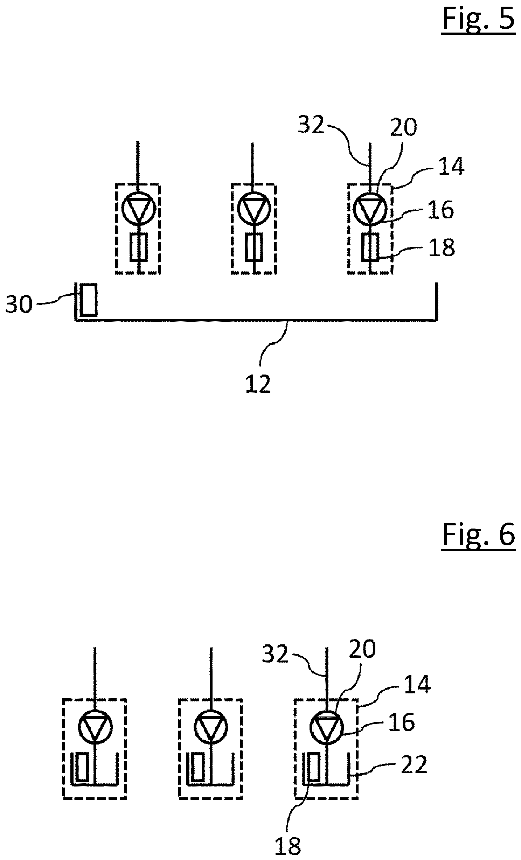

Wie in Fig. 6 gezeigt ist, kann jede Ausbringeinrichtung 14 einen Füllkopf 22 aufweisen, wobei der Füllkopf 22 das Austrittsende der Einrichtung 14 darstellt (vgl. auch Fig. 4A). Für eine besonders präzise Messung des für das Käsebruch-Molke-Gemisch charakteristischen Parameters kann die Sensoreinheit 18 in dem Füllkopf 22 angeordnet oder in ihn integriert sein.

Ferner ist eine Steuereinheit 24 vorgesehen, welche dazu eingerichtet und ausgebildet ist, einen Betriebsparameter der Ausbringeinrichtungen 14 auf der Grundlage des für das Käsebruch-Molke-Gemisch charakteristischen Parameters zu steuern. Insbesondere ist die Steuereinheit 24 dazu eingerichtet, zumindest einen Betriebsparameter der Durchflusssteuereinrichtungen 16 auf der Grundlage des für das Käsebruch-Molke-Gemisch charakteristischen Parameters zu steuern. Dies ermöglicht es, die vorgenannten, unerwünschten Variationen der Gemisch-Eigenschaften aufgrund des zeitlich nicht konstanten Verhältnisses von Käsebruch zu Molke in dem auszubringenden Gemisch zu kompensieren.

Das Bestimmen des für das Käsebruch-Molke-Gemisch charakteristischen Parameters kann in der Sensoreinheit 18 oder in der Steuereinheit 24 erfolgen. Beispielsweise kann die Steuereinheit 24 dazu eingerichtet und ausgebildet sein, um den für das Käsebruch-Molke-Gemisch charakteristischen Parameter von jeder der Sensoreinheiten 18 zu empfangen. Die Steuereinheit 24 kann aber auch dazu eingerichtet und ausgebildet sein, Messdaten von den Sensoreinheiten 18 zu empfangen, und auf der Grundlage der empfangenen Messdaten den jeweiligen charakteristischen Parameter für jede der Ausbringeinrichtungen 14 zu bestimmen.

Die Steuereinheit 24 kann ein integraler Bestandteil der Abfülleinheit 10 oder eine externe oder separat angeordnete Vorrichtung sein. Bevorzugt ist die Steuereinheit 24 als eine zentrale Steuereinheit 24 ausgebildet, welche den für das Käsebruch-Molke-Gemisch charakteristischen Parameter von einer Teilmenge der Sensoreinheiten 18 oder jeder der Sensoreinheiten 18 empfangen oder bestimmen kann. Es ist aber auch eine Konfiguration denkbar, bei der für jede der Ausbringeinrichtungen 14 eine separate Steuereinheit vorgesehen ist, wobei die jeweiligen Steuereinheiten dazu eingerichtet und ausgebildet sind, einen Betriebsparameter der jeweiligen Ausbringeinrichtung 14 zu steuern.

Der Betriebsparameter der Ausbringeinrichtungen 14, welcher von der Steuereinheit 24 gesteuert werden kann, ist beispielsweise eine Pumpleistung einer jeweiligen Pumpe 20. Beispielsweise kann die Steuereinrichtung 24 in einem Fall, in dem die Steuereinrichtung 24 einen charakteristischen Parameter des Käsebruch-Molke-Gemisches für eine der Ausbringeinrichtungen 14 erfasst, welcher auf einen vergleichsweise geringen Anteil an Käsebruch in dem Gemisch im Vergleich zu den übrigen Ausbringeinrichtungen 14 hinweist, die Pumpleistung und damit den Durchfluss für diese Ausbringeinrichtung 14 zu erhöhen. Entsprechend kann für eine Ausbringeinrichtung 14 mit einem vergleichsweise hohen Anteil an Käsebruch die Pumpleistung reduziert werden. Es versteht sich, dass im Falle der Verwendung eines Ventils als Durchflusssteuereinrichtung 16 das Ventil entsprechend dem charakteristischen Parameter des Käsebruch-Molke-Gemisches mehr oder weniger geöffnet werden kann. Dadurch kann sichergestellt werden, dass in jedem der sich unter den jeweiligen Ausbringeinrichtungen 14 befindlichen Abschnitten des Aufnahmebehältnisses 12 im Wesentlichen gleich viel Masse an Käsebruch ausgebracht wird. Die individuelle Steuerung des Betriebsparameters einer jeden Ausbringeinrichtung 14 ermöglicht daher ein homogenes Ausbringen des Käsebruch-Molke-Gemisches in das Aufnahmebehältnis 12.

Ergänzend kann die Steuereinheit 24 auch dazu eingerichtet und ausgebildet sein, den Betriebsparameter der Ausbringeinrichtungen 14 auf der Grundlage zumindest eines Parameters der Bewegung der Ausbringeinrichtungen 14 zu steuern. Dadurch kann die örtliche Homogenität des in das Aufnahmebehältnis 12 ausgebrachten Käsebruch-Molke-Gemisches weiter erhöht werden.

Insbesondere kann die Steuereinrichtung 24 den Betriebsparameter der Ausbringeinrichtungen 14 in Abhängigkeit einer Geschwindigkeit der Bewegung, mit welcher die Ausbringeinrichtungen 14 gemeinsam oder individuell relativ zu dem Aufnahmebehältnis 12 bewegt werden, steuern. Beispielsweise erhöht die Steuereinrichtung 24 in einem Fall, in dem die Steuereinrichtung 24 als charakteristischen Parameter eine hohe Geschwindigkeit aller gemeinsam bewegten Ausbringeinrichtungen 14 erfasst, die Pumpleistung aller Pumpen 20 und damit den Durchfluss aller Ausbringeinrichtungen 14. Entsprechend kann die Steuereinrichtung 24 die Pumpleistung für einzelne Ausbringeinrichtungen 14, welche im Vergleich zu anderen Ausbringeinrichtungen 14 schnell bzw. langsam bewegt werden, erhöhen bzw. reduzieren. Dies ermöglicht ein noch homogeneres Ausbringen des Käsebruch-Molke-Gemisches in das Aufnahmebehältnis 12 und somit eine noch gleichmäßigeren Gewichtsverteilung des hergestellten Käses.

Die Steuereinrichtung 24 kann auch Beschleunigungs- und Abbremsvorgänge des Wagens 38 bei dem Beginn bzw. am Ende eines Füllvorgangs des Aufnahmebehältnisses 12 berücksichtigen. D.h. sie steuert den Betriebsparameter der Ausbringeinrichtungen 14 in Abhängigkeit einer Beschleunigung, mit welcher die Ausbringeinrichtungen 14 gemeinsam oder individuell relativ zu dem Aufnahmebehältnis 12 bewegt werden. Beispielsweise werden die Ausbringeinrichtungen 14 während eines Ausbringvorgangs von einem Rand des Aufnahmebehältnisses 12 aus beschleunigt und hin zu einem gegenüberliegenden Rand des Aufnahmebehältnisses 12 wieder abgebremst. Dem Rechnung tragend kann die Steuereinrichtung 24 beispielsweise die Pumpleistung der Pumpen 20 graduell während des Beschleunigungs- bzw. Abbremsvorgangs anpassen, um so speziell an den Rändern des Aufnahmebehältnisses 12 eine noch homogenere Verteilung des Käsebruch-Molke-Gemisches zu erreichen.

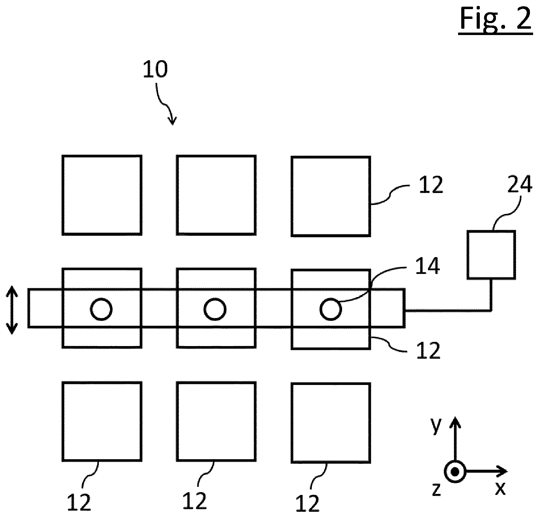

Fig. 2 zeigt eine schematische Darstellung einer weiteren beispielhaften Variante einer Abfülleinrichtung 10 gemäß der vorliegenden Erfindung. Die in Fig. 2 gezeigte Abfülleinrichtung 10 unterscheidet sich von der in Fig. 1 gezeigten Abfülleinrichtung 10 im Wesentlichen dadurch, dass die Abfülleinrichtung 10 anstatt eines einzelnen Aufnahmebehältnisses 12 eine Anordnung von Aufnahmebehältnissen 12 umfasst. Die Anordnung von Aufnahmebehältnissen 12 ist eine beliebige zweidimensionale, matrixförmige Anordnung von mehreren beabstandeten oder getrennten Aufnahmebehältnissen 12. Eine solche Anordnung von Aufnahmebehältnissen 12 findet beispielsweise in einer an sich bekannten Kassettenpresse Anwendung.

Die mehreren Ausbringeinrichtungen 14 sind im gezeigten Beispiel nebeneinander mit jeweils gleichen Abständen zueinander angeordnet, und die Anzahl der Spalten der matrixförmigen Anordnung von Aufnahmebehältnissen 12 entspricht der Anzahl an nebeneinander angeordneten Ausbringeinrichtungen 14. Es ist auch denkbar seitlich, d.h. in x-Richtung, verfahrbare Ausbringeinrichtungen 14 vorzusehen, so dass deren Anzahl reduziert werden kann.

Eine zweidimensionale Anordnung von Aufnahmebehältnissen 12 hat den Vorteil, dass nach dem Ausbring- und Pressvorgang der verbleibende Käsekuchen nicht zerteilt werden muss, da das Käsebruch-Molke-Gemisch bereits in Käseformen, welche der gewünschten Käsegröße entsprechen, gefüllt worden ist.

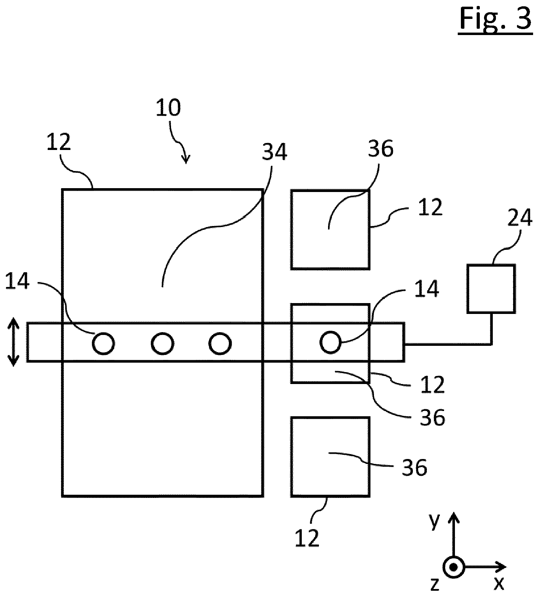

Fig. 3 zeigt eine schematische Darstellung einer weiteren beispielhaften Variante einer Abfülleinrichtung 10 gemäß der vorliegenden Erfindung. Die in Fig. 3 gezeigte Abfülleinrichtung 10 unterscheidet sich von der in Fig. 1 und 2 gezeigten Abfülleinrichtungen 10 im Wesentlichen dadurch, dass die Abfülleinrichtung 10 mehrere Aufnahmebehältnisse 12 umfasst, die sich teilweise in ihrer Größe, insbesondere in ihrer Fläche, in die das Käsebruch-Molke-Gemisch ausgebracht werden kann, unterscheiden. Diese Anordnung ermöglicht eine hohe Flexibilität in Bezug auf die Größe der einzelnen hergestellten Käse.

Insbesondere umfasst die Abfülleinrichtung 10 ein Aufnahmebehältnis 12 mit einer ersten Ausbringfläche 34, und drei weitere Aufnahmebehältnisse 12 mit einer kleineren, zweiten Ausbringfläche 36. Die drei Aufnahmebehältnisse 12 mit der zweiten Ausbringfläche 36 sind neben dem Aufnahmebehältnis 12 mit der ersten Ausbringfläche 34 in einer Spalte angeordnet. Entsprechend sind mehrere Ausbringeinrichtungen 14 dem Aufnahmebehältnis 12 mit der ersten Ausbringfläche 34 und eine Ausbringeinrichtung 14 der Spalte von Aufnahmebehältnissen 12 mit der zweiten Ausbringfläche 36 zugeordnet.

Es versteht sich, dass die jeweilige Anordnung der Aufnahmebehältnisse 12 und die entsprechende Zuordnung der Ausbringeinrichtungen 14 gemäß der in Fig. 1, 2 und 3 gezeigten Varianten nur beispielhaft sind und beliebig miteinander kombiniert werden können. Beispielsweise ist auch eine Konfiguration möglich, bei der ein einzelnes Aufnahmebehältnis 12 (z.B. eine Vorpresswanne) neben einer zweidimensionalen, matrixförmigen Anordnung von Aufnahmebehältnissen 12 (z.B. Aufnahmebehältnisse einer Kassettenpresse) angeordnet ist.

Gemäß einer weiteren Ausführungsform kann der Wagen 38 einen Zwischentank 26 umfassen, der mit den Ausbringeinrichtungen 14 in Verbindung steht (vgl. Fig. 4A, 4B). Insbesondere kann der Zwischentank 26 strömungstechnisch über die jeweiligen Förderrohre 32 mit jeder der Ausbringeinrichtungen 14 verbunden sein. Das Vorsehen separater Rohre 32 für jede der Ausbringeinrichtungen 14 macht die eingangs erwähnten Verteilerrohre obsolet, wodurch die damit einhergehenden Probleme vermieden werden. Der Tank 26 weist eine Mischeinrichtung 28 auf (beispielsweise einen Mischrotor), welche zum Homogenisieren des Käsebruch-Molke-Gemischs genutzt werden kann. Durch die Mischeinrichtung 28 können zeitliche Schwankungen des Käsebruch-Molke-Verhältnisses bereits im Zufluss zu den Ausbringeinrichtungen 14 reduziert werden, wodurch der Steuerungsbedarf der Durchflusssteuereinrichtungen 16 verringert wird.

Zusätzlich kann, wie in Fig. 5 gezeigt, zumindest ein Sensor 30 zum Erfassen eines charakteristischen Füllparameters des in das Aufnahmebehältnis 12 gefüllten Käsebruch-Molke-Gemischs vorgesehen sein. Beispielsweise kann ein Sensor 30 am Rand oder in der Mitte eines Aufnahmebehältnisses 12 vorgesehen sein, oder es können zwei oder mehr Sensoren 30 vorgesehen sein, beispielsweise an verschiedenen Ecken oder an gegenüberliegenden Seiten eines Aufnahmebehältnisses 12. In einem Fall, in dem die Abfülleinrichtung 10 mehrere Aufnahmebehältnisse 12 umfasst (vgl. Fig. 2 und 3), kann zumindest ein Sensor 30 in nur einem Aufnahmebehältnis 12, in einem Teil der Aufnahmebehältnisse 12 oder in jedem der Aufnahmebehältnisse 12 angeordnet sein.

Der charakteristische Füllparameter kann beispielsweise ein Füllstand des Käsebruch-Molke-Gemisches in dem Aufnahmebehältnis 12 sein. Der charakteristische Füllparameter kann auch ein effektiver Füllstand des Käsebruch-Molke-Gemisches in dem Aufnahmebehältnis 12 sein, welcher den Anteil an festem Käsebruch in dem bereits ausgebrachten Gemisch berücksichtigt.

Die Steuereinrichtung 24 kann entsprechend dazu eingerichtet und ausgebildet sein, den charakteristischen Füllparameter von dem Sensor 30 zu empfangen oder den charakteristischen Füllparameter auf der Grundlage der von dem Sensor 30 übermittelten Messdaten zu ermitteln und zumindest einen der vorgenannten Betriebsparameter der Ausbringeinrichtungen 14 auf der Grundlage des erfassten charakteristischen Füllparameters zu steuern.

Beispielsweise kann die Steuereinrichtung 24 bei Erfassung eines niedrigen Füllstands in einem bestimmten Bereich des Aufnahmebehältnisses 12 bzw. in einem der Aufnahmebehältnisse 12, die Pumpleistung der entsprechenden Pumpe 20 und damit den Durchfluss der ihr zugeordneten Ausbringeinrichtungen 14 erhöhen. Umgekehrt kann die Steuereinrichtung 24 die Pumpleistung bei einem hohen Füllstand reduzieren. Dadurch kann das Käsebruch-Molke-Gemisch noch homogener in das Aufnahmebehältnis 12 oder die Anordnung von Aufnahmebehältnissen 12 ausgebracht werden.

### Bezugszeichenliste

- 10: Abfülleinrichtung
- 12: Aufnahmebehältnis
- 14: Ausbringeinrichtung
- 16: Durchflusssteuereinrichtung
- 18: Sensoreinheit
- 20: Pumpe
- 22: Füllkopf
- 24: Steuereinheit
- 26: Zwischentank
- 28: Mischeinrichtung
- 30: Sensor
- 32: Förderrohr
- 34: erste Ausbringfläche
- 36: zweite Ausbringfläche
- 38: Bewegungseinrichtung, Wagen

## Patentansprüche

1. Abfülleinrichtung (10) zum Füllen zumindest eines Aufnahmebehältnisses (12) oder einer Anordnung von Aufnahmebehältnissen (12) mit einem Käsebruch-Molke-Gemisch, umfassend
zumindest zwei Ausbringeinrichtungen (14), die zum Ausbringen des Käsebruch-Molke-Gemisches in das Aufnahmebehältnis (12) oder die Aufnahmebehältnisse (12) eingerichtet und ausgebildet sind;
wobei jede der Ausbringeinrichtungen (14) zumindest eine Durchflusssteuereinrichtung (16) zum Steuern eines Durchflusses des Käsebruch-Molke-Gemisches durch die jeweilige Ausbringeinrichtung (14) und zumindest eine Sensoreinheit (18) zur Bestimmung zumindest eines für das die jeweilige Ausbringeinrichtung (14) durchströmende Käsebruch-Molke-Gemisch charakteristischen Parameters umfasst;
wobei eine Steuereinheit (24) vorgesehen ist, die zum Steuern zumindest eines Betriebsparameters der Ausbringeinrichtungen (14), insbesondere zumindest eines Betriebsparameters der Durchflusssteuereinrichtungen (16), auf der Grundlage des für das Käsebruch-Molke-Gemisch charakteristischen Parameters eingerichtet und ausgebildet ist.

2. Abfülleinrichtung (10) nach Anspruch 1,
wobei zumindest eine der Durchflusssteuereinrichtungen (16) eine Pumpe (20) umfasst, insbesondere wobei jede der Durchflusssteuereinrichtungen (16) eine Pumpe (20) umfasst.

3. Abfülleinrichtung (10) nach Anspruch 2,
wobei der Betriebsparameter der Durchflusssteuereinrichtung (16) eine Pumpleistung der Pumpe (20) ist.

4. Abfülleinrichtung (10) nach einem der Ansprüche 1 bis 3,
wobei jede Ausbringeinrichtung (14) genau einen Füllkopf (22) aufweist, wobei jedem der Füllköpfe (22) genau ein Aufnahmebehältnis (12) der Anordnung von Aufnahmebehältnissen (12) zugeordnet ist und/oder wobei dem Aufnahmebehältnis (12) mehrere Füllköpfe (22) zugeordnet sind.

5. Abfülleinrichtung (10) nach einem der Ansprüche 1 bis 4,
wobei die Steuereinheit (24) dazu eingerichtet und ausgebildet ist, das Ausbringen des Käsebruch-Molke-Gemisches in die Aufnahmebehältnisse (12) der Anordnung von Aufnahmebehältnissen (12) für jedes Aufnahmebehältnis (12) individuell zu steuern und/oder das Ausbringen des Käsebruch-Molke-Gemisches in das Aufnahmebehältnis (12) räumlich zu steuern.

6. Abfülleinrichtung (10) nach einem der Ansprüche 1 bis 5,
wobei der für das Käsebruch-Molke-Gemisch charakteristische Parameter eine Durchflussmenge, eine Volumendichte, eine Dichteverteilung, eine Temperatur, eine thermische oder elektrische Leitfähigkeit, eine thermische oder elektrische Kapazität und/oder ein Absorptionskoeffizient des Käsebruch-Molke-Gemisches ist.

7. Abfülleinrichtung (10) nach einem der Ansprüche 1 bis 6,
ferner umfassend eine Bewegungseinrichtung (38) eingerichtet und ausgebildet zum gemeinsamen oder individuellen Bewegen der Ausbringeinrichtungen (14) relativ zu dem Aufnahmebehältnis (12) oder der Anordnung von Aufnahmebehältnissen (12).

8. Abfülleinrichtung (10) nach Anspruch 7,
wobei die Steuereinheit (24) ferner dazu eingerichtet und ausgebildet ist, den Betriebsparameter der Ausbringeinrichtungen (14) auf der Grundlage zumindest eines Parameters der Bewegung der Ausbringeinrichtungen (14), insbesondere in Abhängigkeit einer Geschwindigkeit der Bewegung, mit welcher die Ausbringeinrichtungen (14) gemeinsam oder individuell relativ zu dem Aufnahmebehältnis (12) oder der Anordnung von Aufnahmebehältnissen (12) bewegt werden, zu steuern.

9. Abfülleinrichtung (10) nach Anspruch 7 oder 8,
wobei die Bewegungseinrichtung (38) einen Zwischentank (26) umfasst, der mit den Ausbringeinrichtungen (14) in Verbindung steht.

10. Abfülleinrichtung (10) nach Anspruch 9,
wobei der Zwischentank (26) eine Mischeinrichtung (28), insbesondere einen Mischrotor, zum Homogenisieren des Käsebruch-Molke-Gemischs umfasst.

11. Abfülleinrichtung (10) nach zumindest einem der vorstehenden Ansprüche, wobei zumindest ein Sensor (30) zum Erfassen eines charakteristischen Füllparameters des in das Aufnahmebehältnis (12) oder die Anordnung von Aufnahmebehältnissen (12) gefüllten Käsebruch-Molke-Gemischs vorgesehen ist.

12. Verfahren zum Füllen zumindest eines Aufnahmebehältnisses (12) oder einer Anordnung von Aufnahmebehältnissen (12) mit einem Käsebruch-Molke-Gemisch durch eine Abfülleinrichtung (10) nach einem der Ansprüche 1 bis 11, umfassend die Schritte:
Erfassen des charakteristischen Parameters von der Sensoreinheit (18) und
Steuern zumindest eines Betriebsparameters der Ausbringeinrichtungen (14) auf der Grundlage des erfassten charakteristischen Parameters.

13. Verfahren nach Anspruch 12,
umfassend ferner die Schritte:
Erfassen eines charakteristischen Füllparameters des in das Aufnahmebehältnis (12) oder die Anordnung von Aufnahmebehältnissen (12) gefüllten Käsebruch-Molke-Gemischs mittels zumindest eines Sensors (30) und
Steuern zumindest eines Betriebsparameters der Ausbringeinrichtungen (14) auf der Grundlage des erfassten charakteristischen Füllparameters.

14. Verfahren nach Anspruch 12 oder 13,
umfassend ferner die Schritte
Erfassen eines Parameters der Bewegung der Ausbringeinrichtungen (14) mittels zumindest eines Sensors und/oder Empfangen eines Parameters der Bewegung der Ausbringeinrichtungen (14) von einer Steuereinrichtung der Bewegungseinrichtung (38)
und
Steuern zumindest eines Betriebsparameters der Ausbringeinrichtungen (14) auf der Grundlage des erfassten oder empfangenen Parameters der Bewegung der Ausbringeinrichtungen (14).
